# EUROPEAN PATENT SPECIFICATION

(11) **EP 1 574 030 B1**
(45) Date of publication and mention of the grant of the patent: **30.07.2008**
(21) Application number: 03789648.7
(22) Date of filing: 18.12.2003
(51) Int. Cl.: H04M 3/487, H04M 7/00

(54) **METHOD AND DEVICE FOR COUPLING A COMMUNICATION LINK TO A COMPUTER SERVICE**
VEFAHREN UND SYSTEM ZUM KOPPELN EINER KOMMUNIKATIONSVERBINDUNG MIT EINEM RECHNERDIENST
PROCEDE ET DISPOSITIF PERMETTANT DE COUPLER UNE LIAISON DE COMMUNICATION A UN SERVICE INFORMATIQUE

(30) Priority: 20.12.2002 NL 1022239
(43) Date of publication of application: 14.09.2005
(73) Proprietor: Lookatel B.V., 1035 NR Amsterdam (NL)
(72) Inventor: ALBERTS, Paul, NL-1035 NR Amsterdam (NL)
(74) Representative: van Westenbrugge, Andries
(86) International application number: PCT/NL2003/000905
(87) International publication number: WO 2004/057850

(56) References cited:
- FR-A- 2 810 827

## Description

### Background to the invention

The present invention relates to a method and a device for coupling a communication link in a first network to a computer service in a second network, comprising the steps of reception of a first identification and a second identification which are representative of a first and second device respectively in the first network, between which the communication link is to be set up, and the setting up of the communications connection.

French patent application FR-A-2810827 describes a method for transmission of information to a user device. The features of the preamble of claim 1 arc known from this publication.

A method of this type is known, for example, as an Internet service, which can set up a voice connection from a computer network into a telephone network. On a Web page, a user enters its own telephone number and a telephone number to be called, whereupon the server providing the Internet service sets up the connection in parts. The result is a voice connection between the user's own number and the number to be called. The disadvantage of this method is that the user must perform additional actions in order to begin a 'normal' telephone call. It is suitable in particular for companies providing information via an Internet page, with the additional facility of setting up a call connection between a person looking at the page and, for example, a call centre of the company.

Another form of telephony is known as VoIP (Voice over Internet Protocol). Known methods exist which set up a communication link between two users, in which in each case part of the connection is not circuit-switched (as in the normal telephony network) but packet-switched via the IP network. One disadvantage is that the user often needs to install additional software and/or hardware for this purpose. A high-speed Internet connection is also required for a connection of reasonable quality, and even then the quality of the communication link is not guaranteed (due to the packet-switched nature of the IP network).

Furthermore, methods are known for the provision of communication link to a user in exchange for listening to spoken advertising messages. The provider of the advertising message, in a manner of speaking, sponsors the communication link. The disadvantage of this method is that a call in progress can be interrupted by the advertising message. This causes disruption to the user, as a result of which the user will quickly give up using this method.

### Summary of the invention

An object of the present method is to produce a method and device for setting up communication link from a computer network which does not present the aforementioned disadvantages.

This is achieved by a method of the type defined above, having the features of the characterising part of claim 1. The interaction may, for example, comprise checks carried out at defined intervals (for example once every three seconds) to determine whether both the computer service and the telephone connection are still active, or a different form of synchronisation between actions on the first network and the application/user interface on the second network.

The first network may, for example, be a telephony network (public telephony network, with both fixed and mobile connections, or a corporate network) and the first and second devices may be (mobile) telephones. The further device may, for example, be a personal computer with an Internet connection.

In order to make sure that the user actually looks at the message, the method comprises, the further step of interruption of the communication link essentially as soon as the computer service is ended. If, for example, the user closes or minimises the window in which the advertising message is presented, the communication link is automatically interrupted by the present method, possibly preceded by a warning message.

In a first embodiment, the computer service comprises the presentation of a message, such as an advertising message, on the further device, which is located within the field of view of the user of the first device for this purpose. The message may be an image, a moving image (such as a video film), an animation or the like, and may comprise, for example, advertising from a sponsor of the communication link. This embodiment enables the provision (entirely or partly) free of charge of, for example, telephony in exchange for the viewing of advertising messages (known as Direct Calling). This can offer advantages to an advertising provider, since no extensive shipment of printed advertising material is required, thereby achieving savings on printing costs and logistics costs. The user benefits from a lower telephone bill.

As mentioned above, the communication link in one embodiment is a telephone connection, for example a direct line connection between the fixed network, a mobile network, a corporate network, a VoIP network, or combinations thereof.

In a further embodiment, the period has a predefined maximum duration, which may, for example, be linked to a link type. For a communication link via the fixed telephony network, a period of, for example, ten minutes may apply, whereas a period of two minutes may apply for a communication link via the mobile telephony network. The costs to the provider (sponsor) of the communication link can thereby be maintained constant for each user. The remaining connection time may, for example, be represented by a countdown meter, which is displayed on the further device.

In order to make the advertising messages effective for a target group of users, the present method furthermore comprises, in a further embodiment, the steps of collection of communications data, for example in the form of e-mail addresses or telephone numbers, of a multiplicity of users of first devices with associated profile data, selection of a subgroup from the multiplicity of users by means of the respective profile data, and the facilitation of the communication link according to the present invention only for users from the subgroup. The facilitation may, for example, be performed by sending a notification to the relevant users in the form of an e-mail message, a spoken message or an SMS (or MMS) message to the associated telephone number.

In a still further embodiment, the computer service comprises a plurality of messages which are characterised by respective profiles, and each of the plurality of messages is selected for a subgroup whose profile data primarily correspond to the respective profile. As a result, (advertising) messages geared towards the selected target group can be delivered.

A user can be identified in one of the embodiments described above by means of a unique user identification, such as an e-mail address, a telephone number, or a combination of a username and password. This eliminates the need to use further data of the user (real name, address), which offers advantages from the point of view of privacy.

In order to provide users of the present invention with greater case of use, the method comprises, in a further embodiment, the step of storing a list of telephone numbers for respective users.

It is noted that a method is known from patent publication WO99/60789 for selecting a subgroup from a group of users of an interactive television guide system based on the behaviour of the users in using the interactive television guide system (watching or recording of, or requesting of information relating to a TV programme). Advertising messages can then be specifically presented via the TV system to a defined target group.

In a further aspect, the present invention relates to a device as described in claim 9

In a further embodiment, the device further comprises a first database connected to the processing means for storing messages, and a second database connected to the processing means for storing user data.

The processing means of the present device are further designed to carry out the method according to the present invention.

In a still further aspect, the present invention relates to a software computer program product or a computer readable medium comprising coded instructions which, whenever said instructions are loaded onto a processing means which is connected to a first network and a second network, enable the processing means, for example a computer server, to carry out the method according to the present invention.

### Brief description of the drawings

The present invention will be described in more detail below with the aid of a number of typical embodiments, with reference to the attached drawings, in which:

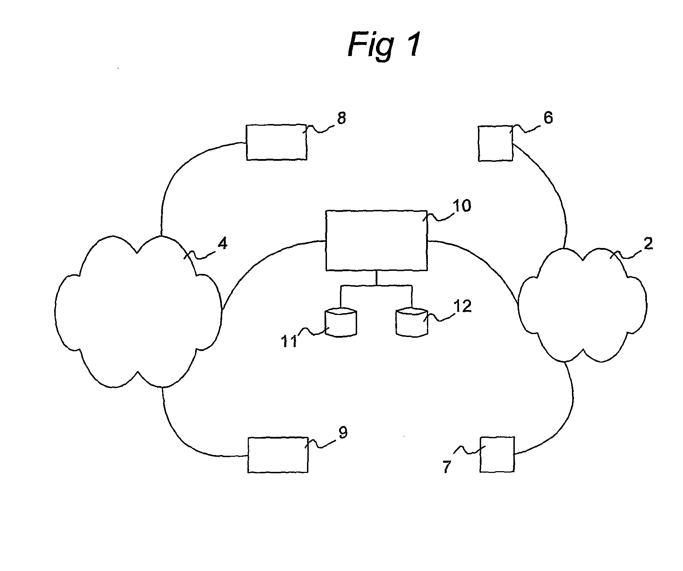

Fig. 1 shows a schematic overview of a first embodiment of the present invention;
Fig. 2 shows a view of a device connected to the second network, on which messages are represented.

### Detailed description of typical embodiments

The present invention relates to a method in which two networks 2, 4 play a part. Although the functions of the two networks 2, 4 differ, as will be explained below, the physical implementation of the two networks 2, 4 can be the same, for example an IP network, or different, for example a public telephone network 2 and an IP network 4.

In a first embodiment of the present invention, a first network 2 is formed by a telephony network, such as a public telephony network (fixed line/mobile) or a corporate telephone network. Devices within this first network 2 enable a voice connection between a first device 6 and a second device 7. The first and second devices 6, 7 are, for example, telephone sets, which can be identified by a telephone number. The devices within the first network 2 operate in a manner known to the person skilled in the art, and are not explained in more detail here.

A second network 4 is formed by a data network, for example the Internet or an Intranet, and enables (data) communications between a further device 8 which is connected to the second network 4. The further device 8 is, for example, a personal computer, which is connected to the second network 4 using means known per se, such as modems or network adapters.

An important element of the present invention comprises processor means 10, for example in the form of a computer server, on which the method of the present invention is carried out. The computer server 10 is connected in a known manner via suitable interfaces to devices in both the first and the second networks 2, 4. Furthermore, a first database 11 and a second database 12 are connected to the computer server 10, the function of which will be explained below.

An application runs on the computer server 10, said application enabling a communications connection (such as a voice connection) to be set up in the first network 2 between a first and second device 6, 7 by forwarding two telephone numbers (or other identifications of the first and second device 6, 7) to an exchange (not shown) present in the first network 2. A connection is first set up, for example, between the exchange and the first device 6, and then between the exchange and the second device 7, ultimately resulting in a direct connection between the first and second device 6, 7.

Similarly, the same method can be used in order to set up a conference call between the first device 6, the second device 7 and further devices 9 which are connected to the first network 2.

The computer server 10 may stand alone or form part of the first network 2 or the second network 4. Similarly, the application which implements the present invention can be run on processing means such as a computer server which is already present in the first or second network 2, 4.

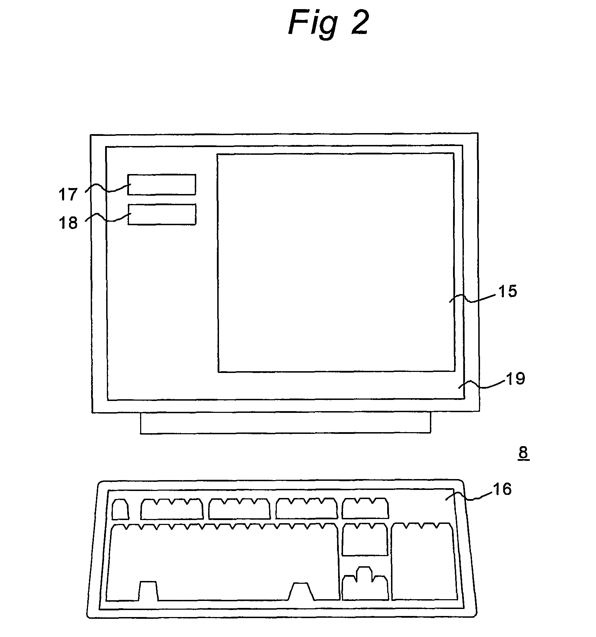

According to the first embodiment of the present invention, a method is carried out in the computer server 10 which enables a (computer) service to be offered synchronously with the communication link in the first network 2 on a further device 8 connected to the second network 4. Thus, for example, if the further device 8, for example in the form of a personal computer or mobile computer device (for example a PDA, PC telephone or the like) is located within the field of view of the user of the first device 6, a message can be shown on the further device 8. Fig. 2 shows a simplified view of a further device 8 of this type. The further device 8 comprises a monitor 19 and a keyboard 16 (and/or further input devices such as a mouse or the like). The message may, for example, be an advertising message from a sponsor which fully or partly pays for the communication link in the first network 2 in exchange for viewing the advertising message on the monitor 19. The advertising message may be a still image, a series of images (video film) or an animation, presented in a window 15 on the monitor 19. The window 15 may of course also cover the entire monitor 19.

The further device 8 may also be equipped to serve, for example, as a Web browser for an Internet application which is run on the computer server 10. Potential users are approached in order to enable the sponsored telephone communication. These users must enter a number of data, including in each case a unique contactability code, such as a telephone number or an e-mail address. This also offers the advantage that the user can largely remain anonymous, since no name or address data are required. As soon as a sponsored communication link is available to the user, said user can receive a message relating thereto, for example via e-mail, a spoken message via the telephone (first device 6) or an SMS message to the telephone. The user can then, with the aid of the further device 8, take further steps in the application running on the computer server 10.

The application may show an input screen, for example on the screen of the further device 8 of the user, comprising, for example, as shown in Fig. 2, two input fields 17, 18, on which the telephone numbers of the sponsored connection which is to be set up can be entered. On receiving the input, the computer server 10 can then set up the communication link in the first network 2 in the manner described above and, as soon as said link is set up, can display the advertising message in the window 15. The advertising messages are, for example, stored in digital form in the first database 11, and may also comprise direct links, so that a user can go directly to the web site of the advertising provider.

In a further embodiment, the application may include a telephone directory for each user (identifiable via his/her e-mail address, telephone number, or in a customary manner for computer applications in the form of an issued username and password), in which the user can enter a list of telephone numbers to be called via the further device 8.

The communication link can be limited, not only in terms of coverage area (countries to which calls can be made), but also in terms of time duration. The sponsor then determines the time which is made available to the relevant user (for example ten minutes for a fixed connection or two minutes for a mobile connection). The sponsor can also determine how many calls a relevant user may make. In a further embodiment, a countdown clock is displayed on the monitor 19, displaying the remaining available (sponsored) time.

The communication link and the display of the message run synchronously under the control of the application on the computer server 10, i.e., as soon as the display of the message is interrupted (for example by the user closing the relevant window 15), the communication link is also interrupted. A warning may possibly also be displayed before the communication link is interrupted.

This embodiment of the present invention is highly suitable for a form of direct marketing. The reason for this is that it is possible to request further data from the user group on registration, and possibly at regular intervals thereafter. The data may be processed in ways known per se to form user profiles which are of interest from a marketing perspective. This can also be carried out by the application on the computer server 10, which stores the results (user data and user profiles) in the second database 12. The advertising messages and the associated toll-free communication link can then be used in a targeted manner for a specific subgroup of the users, thereby increasing the effectiveness of the advertising. This may result in savings on conventional paper advertising, along with the associated logistics (printing, shipment, distribution, etc.), which clearly goes hand-in-hand with environmental benefits. For the selected user group, this method offers savings on telecommunications costs.

The application on the computer server 10 may select a subgroup of users from the second database on the basis of wishes expressed by a sponsor for a specific message stored in the database 11. The application then sends a notification to the selected users in the manner described above.

Furthermore, a sponsor may, for example, with the present method, display a further message once the communication link has ended, for example in the form of an offer for a product, to which the user can respond directly via the further device 8.

## Claims

1. Method for coupling a communication link in a first network (2) to a computer service in a second network (4), comprising the steps of:
the reception of a first identification and a second identification which are representative of a first (6) and second device (7) respectively in the first network (2), between which the communication link is to be set up;
the setting up of the communication link;
**characterised in that** continuous interaction takes place between the computer service which is performed in a further device (8) connected to the second network (4) and the communication link in the first network (2), that the method comprises the further step of interruption of the communication link as soon as the computer service is ended, and **in that** the computer service comprises the presentation of an advertisment message, on the further device (8), which is located for this purpose within the field of view of the user of the first device (6), and **in that** the communication link is a telephone connection.

2. Method according to claim 1, in which the communication link is a connection between the first device (6), the second device (7) and at least one further device (9).

3. Method according to one of the preceding claims, in which the period has a predefined maximum duration.

4. Method according to one of the preceding claims, further comprising the steps of:
collection of communications data of a multiplicity of users of first devices (6) with associated profile data;
selection of a subgroup from the multiplicity of users by means of the respective profile data;
facilitation of the communication link according to one of Claims 1 to 6 only for the users from the subgroup.

5. Method according to Claim 4, in which the computer service comprises a plurality of messages which are **characterised by** respective profiles; and each of the plurality of messages is selected for a subgroup, of which the profile data essentially correspond to the respective profile.

6. Method according to one of the preceding claims, in which a user is identified by a unique user identification.

7. Method according to one of the preceding claims, further comprising the step of storing a list of telephone numbers for respective users.

8. Device for coupling a communication link in a first network (2) to a computer service in a second network (4), in which the first network (2) enables a communication link between a first device (6) and a second device (7), the second network (4) comprises a further device (8, 9), and the device further comprises processing means (10) which are connected to the first and second network (2, 4), and the processing means are designed to receive a first identification and a second identification which are representative of the first (6) and second device (7) respectively in the first network (2), between which the communication link is to be set up, and the setting up of the communication link, **characterised in that** the processing means (10) are further designed to perform the computer service in the further device (8) connected to the second network (4), in which continuous interaction takes place between the computer service and the communication link in the first network (2), in which the communication link is interrupted as soon as the computer service is ended and in which the computer service comprises the presentation of an advertisement message, on the further device (8), which is located for this purpose within the field of view of the user of the first device (6), and **in that** the communication link is a telephone connection.

9. Device according to Claim 8, in which the device further comprises a first database (11) connected to the processing means (10) for storing messages, and a second database (12) connected to the processing means (10) for storing user data.

10. Device according to Claim 9, in which the processing means are further designed to carry out the method according to one of Claims 2 to 7.

11. A computer readable medium comprising coded instructions which, whenever said instructions are loaded onto processing means (10) connected to a first network (2) and a second network (4), enable the processing means (10) to carry out the method according to one of Claims 1 to 7.

## Patentansprüche

1. Verfahren zum Koppeln einer Kommunikationsverbindung in einem ersten Netzwerk (2) an einen Computerdienst in einem zweiten Netzwerk (4) umfassend die Schritte:
Empfangen einer ersten Kennung und einer zweiten Kennung, welche kennzeichnend für eine erste (6) bzw. eine zweite (7) Vorrichtung im ersten Netzwerk (2), zwischen denen die Kommunikationsverbindung hergestellt werden soll, sind;
Herstellen der Kommunikationsverbindung;
**dadurch gekennzeichnet, dass** eine kontinuierliche Interaktion zwischen dem in einer weiteren, mit dem zweiten Netzwerk (4) verbundenen Vorrichtung (8) ausgeführten Computerdienst und der Kommunikationsverbindung im ersten Netzwerk (2) stattfindet, wobei das Verfahren den weiteren Schritt der Unterbrechung der Kommunikationsverbindung, sobald der Computerdienst beendet ist, umfasst, und dass der Computerdienst die Darstellung einer Werbenachricht auf der weiteren Vorrichtung (8), welche zu diesem Zweck im des Gesichtsfeld des Benutzers der ersten Vorrichtung (6) angeordnet ist, beinhaltet, und dass die Kommunikationsverbindung eine Telefonverbindung ist.

2. Verfahren nach Anspruch 1, wobei die Kommunikationsverbindung eine Verbindung zwischen der ersten Vorrichtung (6) der zweiten Vorrichtung (7) und mindestens einer weiteren Vorrichtung (9) ist.

3. Verfahren nach einem der voranstehenden Ansprüche, wobei die Periode eine vordefinierte maximale Dauer hat.

4. Verfahren nach einem der voranstehenden Ansprüche, weiter umfassend die Schritte:
Sammeln von Kommunikationsdaten einer Vielzahl von Benutzern der ersten Vorrichtung (6) mit zugehörigen Profildaten;
Auswählen einer Untergruppe aus der Vielzahl von Benutzern anhand der jeweiligen Profildaten;
Ermöglichen der Kommunikationsverbindung entsprechend eines der Ansprüche 1 bis 3 nur für die Benutzer der Untergruppe

5. Verfahren nach Anspruch 4, wobei der Computerdienst eine Vielzahl von Mitteilungen umfasst, welche durch die jeweiligen Profile **gekennzeichnet** sind;
und wobei jede der Vielzahl von Nachrichten für eine Untergruppe ausgewählt wird, deren Profildaten im Wesentlichen zu den jeweiligen Profilen korrespondieren.

6. Verfahren nach einem der voranstehenden Ansprüche, wobei ein Benutzer durch eine einheitliche Benutzerkennung identifiziert wird.

7. Verfahren nach einem der voranstehenden Ansprüche, weiter umfassend den Schritt des Speicherns einer Liste von Telefonnummern für jeweilige Benutzer.

8. Vorrichtung zum Koppeln einer Kommunikationsverbindung in einem ersten Netzwerk (2) mit einem Computerdienst in einem zweiten Netzwerk (4), wobei das erste Netzwerk (2) die Kommunikationsverbindung zwischen einer ersten Vorrichtung (6) und einer zweiten Vorrichtung (7) ermöglicht, das zweite Netzwerk (4) umfasst eine weitere Vorrichtung (8, 9), und die Vorrichtung umfasst ferner mit dem ersten und zweiten Netzwerk (2, 4) verbundene Bearbeitungsmittel (10), und die Bearbeitungsmittel sind ausgebildet, um eine erste Kennung und eine zweite Kennung, welche kennzeichnend für die erste (6) und bzw. zweite (7) Vorrichtung in dem ersten Netzwerk (2) sind, zwischen denen die Kommunikationsverbindung hergestellt werden soll, zu empfangen und die Kommunikationsverbindung herzustellen, **dadurch gekennzeichnet, dass** die Bearbeitungsmittel (10) weiterhin ausgebildet sind, um den Computerdienst in der mit dem zweiten Netzwerk (4) verbundenen weiteren Vorrichtung (8) auszuführen, wobei eine kontinuierliche Interaktion zwischen dem Computerdienst und der Kommunikationsverbindung in dem ersten Netzwerk (2) stattfindet, wobei die Kommunikationsverbindung unterbrochen wird, sobald der Computerdienst beendet wird, und wobei der Computerdienst die Darstellung einer Werbenachricht auf der weiteren Vorrichtung (8) umfasst, welche zu diesem Zweck im des Gesichtsfeld des Benutzers der ersten Vorrichtung (6) angeordnet ist, und dass die Kommunikationsverbindung eine Telefonverbindung ist.

9. Vorrichtung nach Anspruch 8, wobei die Vorrichtung weiter eine mit den Bearbeitungsmitteln (10) verbundene erste Datenbasis (11) zum Speichern von Nachrichten, und eine mit den Bearbeitungsmitteln (10) verbundene zweite Datenbasis (12) zum Speichern von Benutzerdaten umfasst.

10. Vorrichtung nach Anspruch 9, wobei die Bearbeitungsmittel ferner ausgebildet sind, um das Verfahren nach einem der Ansprüche 2 bis 7 auszuführen.

11. Computerlesbares Medium umfassend codierte Befehle, welche immer dann, wenn die Befehle in mit einem ersten Netzwerk (2) und einem zweiten Netzwerk (4) verbundene Bearbeitungsmittel (10) geladen werden, die Bearbeitungsmittel (10) zum Ausführen des Verfahrens nach einem der voranstehenden Ansprüche 1 bis 7 befähigen.

## Revendications

1. Procédé permettant de coupler une liaison de communication dans un premier réseau (2) à un service informatique dans un deuxième réseau (4), comprenant les étapes consistant à :
la réception d'une première identification et d'une deuxième identification qui sont représentatives respectivement d'un premier (6) et d'un deuxième dispositif (7) dans le premier réseau (2) entre lesquels doit être établie la liaison de communication ;
l'établissement de la liaison de communication ;
**caractérisé par le fait qu'**a lieu une interaction continue entre le service informatique qui est réalisé dans un autre dispositif (8) connecté au deuxième réseau (4) et la liaison de communication dans le premier réseau (2), que le procédé comprend l'étape additionnelle consistant à interrompre la liaison de communication dès que le service informatique est terminé, et que le service informatique comprend la présentation d'un message publicitaire, sur l'autre dispositif (8), qui est situé à cet effet dans le champ de vision de l'utilisateur du premier dispositif (6), et que la liaison de communication est une connexion téléphonique.

2. Procédé selon la revendication 1, dans lequel la liaison de communication est une connexion entre le premier dispositif (6), le deuxième dispositif (7) et au moins un autre dispositif (9).

3. Procédé selon l'une des revendications précédentes, dans lequel la période a une durée maximale prédéfinie.

4. Procédé selon l'une des revendications précédentes, comprenant par ailleurs les étapes consistant à:
recueillir les données de communications d'une pluralité d'utilisateurs de premiers dispositifs (6) avec des données de profil associées ;
sélectionner un sous-groupe parmi la pluralité d'utilisateurs au moyen des données de profil respectives ;
faciliter la liaison de communication selon l'une des revendications 1 à 3 uniquement pour les utilisateurs du sous-groupe.

5. Procédé selon la revendication 4, dans lequel le service informatique comprend une pluralité de messages qui sont **caractérisés par** les profils respectifs ;
et chacun de la pluralité de messages est sélectionné pour un sous-groupe dont les données de profil correspondent essentiellement au profil respectif.

6. Procédé selon l'une des revendications précédentes, dans lequel un utilisateur est identifié par une identification d'utilisateur unique.

7. Procédé selon l'une des revendications précédentes, comprenant par ailleurs l'étape consistant à mémoriser une liste de numéros de téléphone pour les utilisateurs respectifs.

8. Dispositif permettant le couplage d'une liaison de communication dans un premier réseau (2) à un service informatique dans un deuxième réseau (4), dans lequel le premier réseau (2) permet une liaison de communication entre un premier dispositif (6) et un deuxième dispositif (7), le deuxième réseau (4) comprend un autre dispositif (8, 9), et le dispositif comprend par ailleurs des moyens de traitement (10) qui sont connectés au premier et au deuxième réseau (2, 4), et les moyens de traitement sont conçus de manière à recevoir une première identification et une deuxième identification qui sont représentatives respectivement du premier (6) et du deuxième dispositif (7) dans le premier réseau (2) entre lesquels doit être établie la liaison de communication, et l'établissement d'une liaison de communication, **caractérisé par le fait que** les moyens de traitement (10) sont par ailleurs conçus de manière à réaliser le service informatique dans l'autre dispositif (8) connecté au deuxième réseau (4), dans lequel a lieu une interaction continue entre le service informatique et la liaison de communication dans le premier réseau (2), dans lequel la liaison de communication est interrompue dès que le service informatique est terminé et dans lequel le service informatique comprend la présentation d'un message publicitaire, sur l'autre dispositif (8), qui est situé à cet effet dans le champ de vision de l'utilisateur du premier dispositif (6), et que la liaison de communication est une connexion téléphonique.

9. Dispositif selon la revendication 8, dans lequel le dispositif comprend par ailleurs une première base de données (11) connectée aux moyens de traitement (10) pour mémoriser les messages, et une deuxième base de données (12) connectée aux moyens de traitement (10) pour mémoriser les données d'utilisateur.

10. Dispositif selon la revendication 9, dans lequel les moyens de traitement sont par ailleurs conçus de manière à réaliser le procédé selon l'une des revendications 2 à 7.

11. Support pouvant être lu dans un ordinateur, comprenant des instructions codées qui, chaque fois que lesdites instructions sont chargées sur les moyens de traitement (10) connectés à un premier réseau (2) et un deuxième réseau (4), permettent que les moyens de traitement (10) réalisent le procédé selon l'une des revendications 1 à 7.
